# EUROPEAN PATENT SPECIFICATION

(11) **EP 4 052 224 B1**
(45) Date of publication and mention of the grant of the patent: **06.09.2023**
(21) Application number: 19795187.4
(22) Date of filing: 28.10.2019
(51) Int. Cl.: G06T 7/579

(54) **METHOD FOR GENERATING A THREE DIMENSIONAL, 3D, MODEL**
VERFAHREN ZUR ERZEUGUNG EINES DREIDIMENSIONALEN (3D) MODELLS
PROCÉDÉ DE GÉNÉRATION D'UN MODÈLE TRIDIMENSIONNEL (3D)

(43) Date of publication of application: 07.09.2022
(73) Proprietor: TELEFONAKTIEBOLAGET LM ERICSSON (PUBL), 164 83 Stockholm (SE)
(72) Inventor: GRANCHAROV, Volodya, 171 67 SOLNA (SE); COMBES, Steven, WORTHING, BN13 IQT (GB)
(74) Representative: Ericsson
(86) International application number: PCT/EP2019/079348
(87) International publication number: WO 2021/083475

(56) References cited:
- EP-A1- 3 477 254
- STRECHA CHRISTOPH ET AL: "Training for Task Specific Keypoint Detection", 9 September 2009 (2009-09-09), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 151 - 160, XP047380375, ISBN: 978-3-642-17318-9 abstract sections 1, 3, 4, 6 figures 1,5
- SAMIR SAHLI ET AL: "Robust vehicle detection in low-resolution aerial imagery", PROCEEDINGS OF SPIE, vol. 7668, 22 April 2010 (2010-04-22), page 76680G, XP055645207, 1000 20th St. Bellingham WA 98225-6705 USA ISSN: 0277-786X, DOI: 10.1117/12.850387 ISBN: 978-1-5106-2687-4

## Description

### TECHNICAL FIELD

The present invention relates to a method for generating a three dimensional, 3D, model. The invention further relates to a computer device performing the method.

### BACKGROUND

Inspection of equipment sites, e.g. telecommunications sites, is an increasingly important task, as wireless communication is becoming an even more dominant means for communication. Inspections may e.g. help in planning what material or spare parts to bring in an upcoming maintenance operation of an equipment site.

As a helpful tool for performing such inspections are visual 3D models. One of the key components in equipment site inspection is the creation of a 3D model, typically from set of 2D images collected by a drone. A popular solution used nowadays is photogrammetry, e.g., Pix4D (https://www.pix4d.com/), which creates 3D models in the form of 3D point-clouds and digital surface models from photographs obtained of the equipment site. If the obtained photos are geo-tagged, then objects in the resulting 3D models can actually be measured with reasonable accuracy. This process is becoming an essential step in deployment and maintenance of telecommunication equipment.

Typically, the 3D modeling of a visual scene (e.g., cell site) is created from a set of 2D images, e.g. as shown in J. Schonberger and J.-M. Frahm, "Structure-from-Motion revisited," in Proc. IEEE Conference on Computer Vision and Pattern Recognition (CVPR), 2016. These images "see" the scene or 3D object from different viewing directions, i.e. from different viewing angles and from different viewing positions.

Identified key points or features from the set of 2D images may then be paired, i.e. identified as belonging to the same key point. Examples of key points may be corners or edges. The fact that a 3D object is viewed from different viewing directions may be used to calculate the depth or distance from a camera to the 3D object, e.g. an antenna, by means of triangulation. One of the most essential steps in such process is the image registration, which builds a geometric model of image transformation (e.g. projective or affine transform), calculated from the set of paired key points from the set of 2D images. The articles "Training for Task Specific Keypoint Detection" by Strecha *et al.,* and "Robust vehicle detection in low-resolution aerial imagery" by Samir *et al.,* disclose methods for detecting in a scene keypoints belonging to object of interest.

A problem with conventional solutions, is that equipment features or sub-objects, such as a particular control or connector, placed on the top or side of the equipment is modeled well, whereas equipment features placed on the bottom of the equipment is not modeled well. In other words, when the drone camera points down, the ground forming the background around the object has sufficient amount of texture and a calculable distance from the camera to the object of focus. The model will then be produced in a clean and crisp manner. However, when the drone camera points up, i.e. photos in the data set that have sky depicted as a background, conventional methods cannot accurately determine the distance from the camera to the sky, key points depicting the sky are often erroneously registered. The result is often a very "dirty" or noisy point cloud.

The conventional workaround for this problem is to only use Orthographic (looking down at 45-70 degrees down tilt relative a vertical plane) or Nadir (90 degrees or vertical downwards) photography to produce the dataset or 2D images.

This workaround produces a clean model, but the problem is that the photos by their very nature don't include the bottom of the equipment, e.g. the underside of antennas, which are key points of interest to an equipment inspector/surveyor. This means it is necessary to resort to other inspection techniques and reality capture solutions, e.g. manually acquire video/photos, to gain such details from the bottom of the equipment. Conventional solutions for building an isolated 3D model include using manual intervention or editing.

Drawbacks of such conventional solutions include a lot of time consuming manual work, which has to be repeated whenever the equipment is re-configured.

There is therefore a need for an automatic solution to generate a 3D model.

### OBJECTS OF THE INVENTION

An objective of embodiments of the present invention is to provide a solution which mitigates or solves the drawbacks described above.

### SUMMARY OF THE INVENTION

The above objective is achieved by the subject matter described herein. Further advantageous implementation forms of the invention are described herein. According to a first aspect of the invention, the above mentioned objectives are achieved by a method defined in claim 1.

An advantage of the first aspect is at least that an improved 3D model, or an 3D model of higher quality is obtained.

According to a second aspect of the invention, the above mentioned objectives are achieved by a computer device configured to generate a three dimensional, 3D, model by performing the method according to the first aspect.

According to a third aspect of the invention, the above mentioned objectives are achieved by a computer program comprising computer-executable instructions for causing a computer device , when the computer-executable instructions are executed on processing circuitry comprised in the computer device, to perform any of the method steps according to the first aspect.

According to a fourth aspect of the invention, the above mentioned objectives are achieved by a computer program product comprising a computer-readable storage medium, the computer-readable storage medium having the computer program according to the third aspect embodied therein.

According to a fifth aspect of the invention, the above mentioned objectives are achieved by a carrier containing the computer program according to the third aspect, wherein the carrier is one of an electronic signal, optical signal, radio signal, or computer readable storage medium.

The advantages of the second, third, fourth and fifth aspect are at least the same as for the first aspect.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

**Fig. 1A-C** illustrates typical scenarios for equipment inspection.
**Fig. 2** illustrates key points depicting a 3D object according to one or more embodiments of the present disclosure.
**Fig. 3** illustrates a method according to one or more embodiments of the present disclosure.
**Fig. 4** shows details of a computer device according to one or more embodiments.
**Fig. 5** shows a flowchart of a method according to one or more embodiments.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In this disclosure the term "two dimensional, 2D, images" denotes output data from a 2D image sensor of a camera, onto which a 3D scene is projected onto. The 2D images are typically obtained, by focusing the light (e.g. by the use of a lens) reflected or emitted from three dimensional, 3D, objects in a scene, onto a light-sensitive surface of the image sensor. The output data is typically spatially organized as pixels within an image frame representing the field of view, FOV, of the camera/lens system and/or the image sensor. The output data typically comprises light intensity according to a color model. Color models may include additive and subtractive color models, such as the Red Green Blue, RGB, color model or the Cyan Magenta Yellow Key, CMYK, color model. Color models may further include cylindrical-coordinate color models, such as Hue Saturation Value, HSV, and Hue Saturation Lightness, HSL. A 2D image may e.g. be a frame, an image or a video frame in a two dimensional, 2D, video. In other words the individual subsequent 2D images, which when shown one after the other make out a video.

In this disclosure the term "camera" denotes an arrangement/camera comprising at least a lens system, an image sensor, processing circuitry, a memory and a communications interface configured to exchange output data from the image sensor with other units, e.g. a computer device. The image sensor may be configured to register intensity of light, e.g. visual light, infrared light etc. The visual light may be registered according to a color model or according to a monochrome model.

In this disclosure the term "viewing direction" denotes a relative direction from a camera/image sensor to a viewed scene, typically a central vector of the FOV or a normal vector of the image sensor surface.

In this disclosure the term "three dimensional, 3D, object" denotes an object in a real world scene, e.g. an equipment site.

In this disclosure the term "background" denotes remaining parts of an obtained image of a real world scene, not depicting the viewed 3D object, typically located further away from the camera in the real world scene. In one example, a 2D image is captured or obtained of a telecommunications tower located in an open grass field. If the image is captured from a location higher than the telecommunications tower relative to the ground or the Earth's surface, the captured image would then depict the telecommunications tower as the 3D object and the grass field as the background.

In this disclosure the term "ground" denotes the surface below the 3D object, typically the Earth's surface.

In this disclosure the term "key points" denotes features in a 2D image, such as corner points or edges with gradients in multiple directions, that can be identified and tracked in subsequent 2D images captured of the same 3D object.

In one example, given an image Im of resolution M by N pixels, a key point is a pair (x,y) specifying coordinates of a particular feature represented by pixels in that image Im. Key point generation is the process of determining those coordinates (x,y). There are multiple conventional algorithms than can be used to perform such operation. As an example, key points could be extracted by means of Harris Corner Detector or corners detected by FAST (Features from Accelerated Segment Test). Alternatively, one can use SURF (Speeded Up Robust Features), where the key point extraction is based on the approximation of the determinant of the Hessian matrix. Another approach for key points location is based on SIFT (Scale-Invariant Feature Transform), where difference-of-Gaussians is used to detect points that are invariant to scale and orientation. Key points can be also selected as center of blobs (image regions) calculated by MSER (Maximally Stable Extremal Regions) method. If applied on the image Im, these algorithms will return different sets of key points. Cardinality of these sets could also be very different, ranging from zero to MxN.

In this disclosure the term "key point descriptor" denotes data indicative of characteristics of a corresponding key point. In one example, the key point descriptor could be a vector indicating an intensity in the direction of the corresponding key points most pronounced orientation. It assigns a numerical description to the area of the image the key point refers to.

The purpose of the key point descriptor is to characterize the image area or section of an obtained image in the vicinity of a key point. The descriptor D of the key point (x,y) is typically a scalar or a finite vector which summarizes the properties of that key point. There are large number of popular key point descriptors. As an example, one can use SURF descriptor which is a 64-dimensional vector of floating-point values based on the sum of the Haar wavelet response around the particular key point. Alternatively, one can use SIFT descriptor, which is a 128-dimensional vector calculate by aggregation histograms of gradient magnitude around the key point. HOG (Histogram of Oriented Gradients) is another descriptor which describes local appearance around a key point by means of concatenated histograms of gradient directions. BRIEF (Binary Robust Independent Elementary Features) descriptor is a binary version of SIFT descriptor in the form of 128 bits number. Beyond capturing the intensity distribution of the pixels within the neighborhood, the descriptors could be based on color gradients, dominant color in the area, etc.

In this disclosure the term "trained model" denotes a model capable of classifying key points in a 2D photograph or 2D frame of a video.

In one example, a drone orbits for capturing images of a cell tower and aims to create 3D model of the telecoms site. From the images key points are generated. The trained model then applies a "classifier" on the key point descriptors to separate key points representing "sky" from key points representing "equipment". The trained model may be a binary classifier that given key point descriptor then outputs labels such as "sky" or "equipment". Known classifiers include [SVM] C. Cortes and V. Vapnik, "Support vector networks," Machine Learning, 1995, and [GMM] C. Bishop, "Pattern recognition and machine learning," Springer, 2006.

The trained model may e.g. comprise a number of weights to combine image features or key points extracted from a frame of a video. This enables the trained model to classify/detect an object using the image/frame features. The image/frame features could be any low-level features, such as edges or pixel attributes for frames/images of the video.

In this disclosure the term "object proposal region" denotes a region indicating an area within which it is proposed or detected that an object is present. The region may have any suitable form such as a rectangle, oval, circle or an arbitrary shaped polygon with an associated center coordinate, e.g. located at or near the center of gravity of the object.

In this disclosure the term "3D model" denotes a model capable of representing 3D objects. In particular representing surfaces and features of 3D objects, typically based on 3D co-ordinates defining the locations of object points in a 3D space e.g. obtained by photogrammetry.

In one example, a 3D model representing an equipment site is generated using a set of 2D images collected by a drone comprising a camera. A conventional solution for generating a 3D model is Pix4D (https://www.pix4d.com/), which is a photogrammetry solution that can create 3D point-clouds and digital surface models from photographs. If the photos are also geo-tagged, then the represented 3D objects can actually be measured, using the model, with reasonable accuracy. This process is e.g. becoming an essential step in inspection, deployment and maintenance of telecommunication equipment.

The proposed solution disclosed herein comprises both a mechanism for learning the statistical properties of key points in a 2D image used for image registration, and further a mechanism for temporarily disabling key points with unwanted properties from the initial registration step. In other words, key points related to a 3D object are used and key points related to the background, typically the sky or sea, are discarded, and not used for image registration.

The telecommunication equipment site (cables, antennas, tower, etc.) typically comprises rigid objects which are suitable and a good input for generating a 3D model. On the contrary, clouds in the sky are difficult to register accurately due to lack of stable key points, variation over time and self-similarity between different parts of the sky. Therefore, in the present disclosure, key points that belong to the unstable background are disabled for image registration and key points from stable objects are enabled for image registration to achieve accurate 3D model of the visual scene.

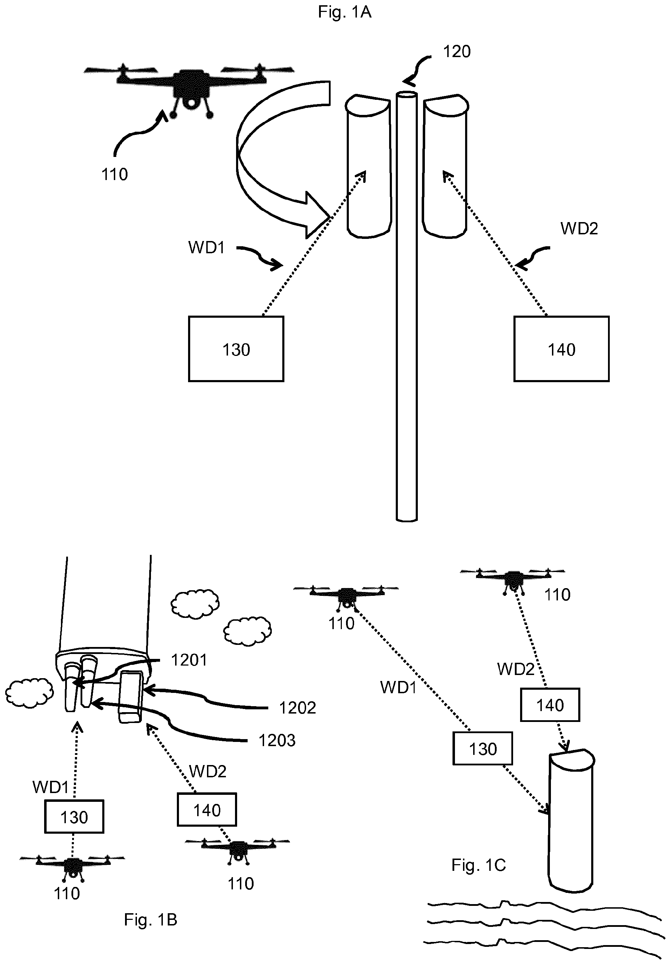

**Fig. 1A**illustrates a typical scenario for equipment inspection. A drone 110 is controlled to encircle a 3D object 120, such as an equipment site, and obtain or capture subsequent two dimensional, 2D, images 130, 140 of the 3D object 120. The drone is typically an unmanned aerial vehicle, UAV. The drone 120 is typically fitted with a camera, e.g. a Red-Green-Blue, RGB, component camera. The camera can used to obtain 2D images of the 3D object 120 from different viewing directions WD1, WD2, e.g. by capturing 2D images from different positions and/or by using different orientation angles relative to the horizontal and vertical plane relative to the ground/earth's surface.

In one example, multiple images may be captured from the same position, only by varying the vertical camera viewing angle/camera orientation angle, e.g. 45 degrees, 90 degrees or 135 degrees relative to the vertical plane. This can also be seen as the camera is controlled to look up, look straight forward and to look down.

Each captured image may comprise a selection of metadata, such as Global Positioning System data, vertical camera orientation angle, horizontal camera orientation angle, time, temperature, altitude etc.

**Fig. 1B** illustrates a scenario for equipment inspection according to the invention. In the scenario in Fig. 1B, viewing directions WD1, WD2 are limited to upward facing viewing directions relative to the ground. As the viewing directions WD1, WD2 are limited to upward facing viewing directions, the dominating background will be depicting the sky.

In a similar manner to the scenario shown in Fig. 1A, the drone 110 is controlled to encircle a 3D object 120, such as an equipment site, and obtain or capture subsequent two dimensional, 2D, images 130, 140 of the 3D object 120. The drone is typically an unmanned aerial vehicle, UAV. The drone 120 is typically fitted with a camera, e.g. a Red-Green-Blue, RGB, component camera. The camera is used to obtain 2D images of the 3D object 120 from different viewing directions WD1, WD2, limited to upward facing viewing directions relative to the ground. In other words, 2D images are captured using a vertical camera viewing angle/camera orientation angle in the range [vertical angle < 90 degrees and vertical angle > zero (0) degrees]. It is understood that the vertical camera viewing angle is seen related to the ground, e.g. a relative to a normal of the ground intersecting with the camera, where 0 degrees represents a view up from the ground along the normal, 90 degrees represents a view towards the horizon and 180 degrees represents a view down from the camera towards the ground along the normal.

**Fig. 1C** illustrates a scenario for equipment inspection according to the invention. In the scenario in Fig. 1C, viewing directions WD1, WD2 are limited to downward facing viewing directions relative to the ground. As the viewing directions WD1, WD2 are limited to downward facing viewing directions, the dominating background will be depicting the ground or the sea.

In a similar manner to the scenario shown in Fig. 1A, the drone 110 is controlled to encircle a 3D object 120, such as an equipment site, and obtain or capture subsequent two dimensional, 2D, images 130, 140 of the 3D object 120. The drone is typically an unmanned aerial vehicle, UAV. The drone 120 is typically fitted with a camera, e.g. a Red-Green-Blue, RGB, component camera. The camera can be used to obtain 2D images of the 3D object 120 from different viewing directions WD1, WD2, e.g. limited to downward facing viewing directions relative to the ground. In other words, 2D images are captured using a vertical camera viewing angle/camera orientation angle in the range [vertical angle < 180 degrees and vertical angle > 90 (0) degrees] or in the range [vertical angle < 180 degrees and vertical angle > 135 degrees]. It is understood that the vertical camera viewing angle is seen related to the ground, e.g. a relative to a normal of the ground intersecting with the camera, where 0 degrees represents a view up from the ground along the normal, 90 degrees represents a view towards the horizon and 180 degrees represents a view down from the camera towards the ground along the normal.

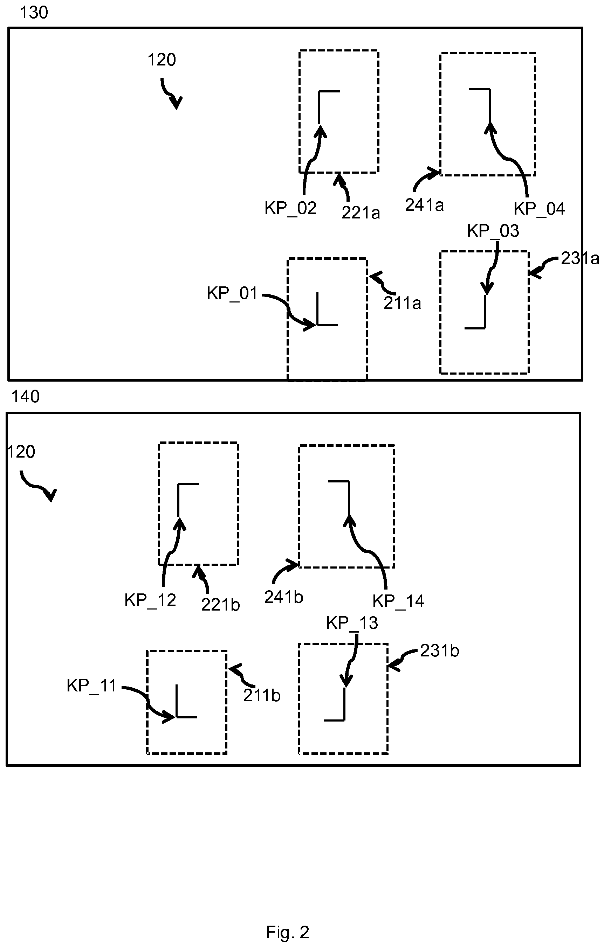

**Fig. 2** illustrates key points depicting a 3D object according to one or more embodiments of the present disclosure. Fig. 2 illustrates a plurality of two dimensional, 2D, images 130,140. In the figure only two images are shown, it is understood that the inventive concept can be extended to any number of images depicting the 3D object. The plurality of 2D images 130, 140 may be obtained using a camera. Each of the plurality of 2D images 130,140 depicts the 3D object 120 and a background of the 3D object, from different viewing directions WD1, WD2.

As can be seen from Fig. 2, a first set of key points KP_01 to KP_04 identified in or generated from a first image 130 of the plurality of 2D images 130, 140. Optionally, the key points may be associated with corresponding key point descriptors. Optionally, the key points may further be associated with proposal regions 211a, 221a, 231a, 241a e.g. bounding boxes.

As can also be seen from Fig. 2, a second set of key points KP_11 to KP_14 are identified in a second image 140 of the plurality of 2D images 130, 140. Optionally, the key points may be associated with corresponding key point descriptors. Optionally, the key points may be associated with proposal regions 211b, 221b, 231b, 241b or bounding boxes.

The second set of key points KP_11 to KP_14 may be matched to the first set of key points KP_01 to KP_04 as representing the same key points or features of the 3D object. In other words, the key points may be tracked from the first image to the second image by concluding that the pairs (KP_01, KP11), (KP_02, KP_12), (KP_03, KP_13) and (KP_04, KP_14) can be matched to each other or correspond to each other.

As previously mentioned in the initial paragraphs of the detailed description in relation to the term "key point descriptor", the key point descriptors may be any suitable key point descriptor, such as a SURF descriptor, a SIFT descriptor, a HOG descriptor or a BRIEF descriptor.

In one or more embodiments, the key point descriptors are based on intensity or color distributions in the vicinity of each key point.

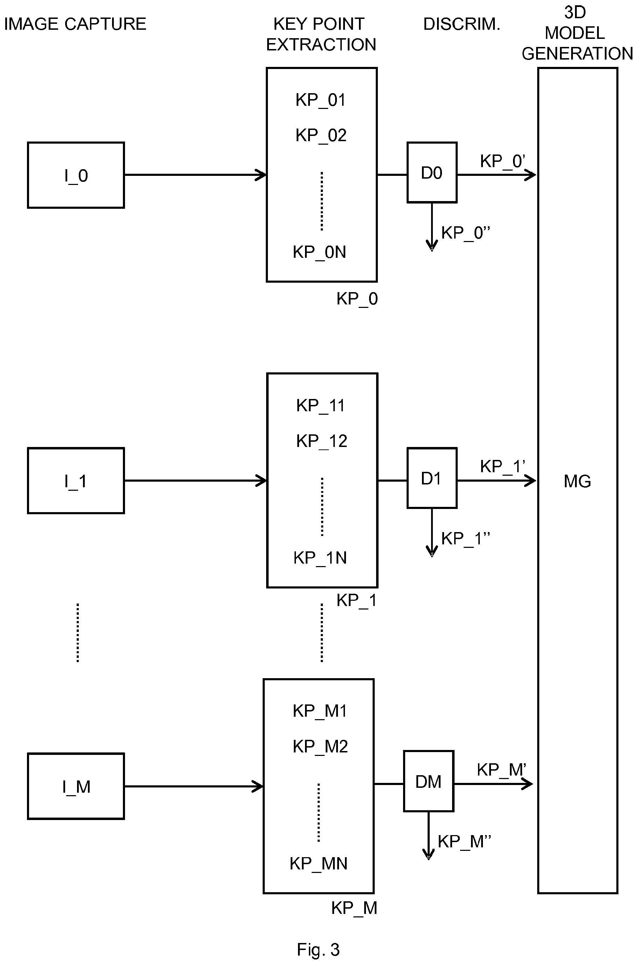

**Fig. 3** illustrates a method according to one or more embodiments of the present disclosure.

As can be seen from Fig. 3, a plurality of 2D images I_0 - I_M are obtained, typically by a camera mounted on a drone. Each of the plurality of 2D images I_0 - I_M depicts the 3D object 120, e.g. an equipment site such as a telecommunications site, and a background of the 3D object, e.g. the sky or the sea, from a different viewing direction WD1, WD2. In other words, a drone may encircle the object 120 and capture the plurality of 2D images I_0 - I_M of the object 120, where most of the background depicts the sky above the object 120 or depicts an underlying sea surface.

A set of key points KP_0, KP_1,... KP_M is then generated for each of the plurality of the obtained 2D images I_0 - I_M. This is further described in the initial paragraphs of the detailed description in relation to the term "key points". In other words, the first image I_0 of the plurality of the obtained 2D images is used to generate a first total set KP_0 of key points related to the object, the second image I_1 of the plurality of the obtained 2D images is used to generate a second total set KP_1 of key points related to the object and the M:th image I_M of the plurality of the obtained 2D images is used to generate an M:th total set KP_0 of key points related to the object.

Each total set of key points KP_0, KP_1,... KP_M is then discriminated into a first subset of key points KP_0', KP_1', ... KP_M' depicting the 3D object 120 and a second subset of key points KP_0", KP_1",... KP_M" depicting the background of the 3D object. In other words, the first total set KP_0 of key points is discriminated into a set KP_0' of key points related to pixels of the image I_0 depicting the object 120 and a set KP_0" related to pixels of the image I_0 depicting the background. The second total set KP_1 of key points is discriminated into a set KP_1' of key points related to pixels of the image I_1 depicting the object 120 and a set KP_1" related to pixels of the image I_1 depicting the background. The M:th total set KP_M of key points is discriminated into a set KP_M' of key points related to pixels of the image I_M depicting the object 120 and a set KP_M" related to pixels of the image I_M depicting the background.

The discrimination of the total sets of key points KP_0, KP_1,... KP_M is, according to the main concept of the present disclosure, performed by applying a trained model to the generated sets of key points KP_0, KP_1,... KP_M.

A 3D model is then generated using only the subsets of key points KP_0', KP_1',... KP_M' depicting the 3D object (120) related to pixels of the image I_M depicting the object 120.

In other words, the presented solution aims at removing or minimizing the impact of key points resulting from an unstable background in the initial registration step of 3D modeling. In some of the discussed scenarios, these key points belong to the sky forming a background behind the cell tower and antennas. In some scenarios such undesirable/unstable background could have a different nature, e.g., dust on the floor of cabinets with telecom equipment.

The disclosed solution consists at least of two important modules. Firstly a model generation module MG, which utilizes knowledge about statistics of key points descriptors to perform robust image registration. Secondly, key point goodness Indicator modules D0-DM, which discriminates key points and provides input to the MG module.

### MG module

For this module we assume that the input from the key point goodness Indicator modules D0-DM is readily available. The details of how this is done are presented in the next section, but for now let's assume that we have a class label C assigned to every generated key point in each 2D image I_0 - I_M. The label indicates if a key point belongs to pixels representing equipment, e.g. rigid telecom equipment, or the unstable background, e.g. the sky. This essentially splits the total set of key points into a first subset K+ (hardware equipment) and a second subset K- (sky or undesirable background).

In one example, generating the 3D model from a set of unstructured 2D images is a multistage process. The major modules of such process may be:
Step 1) Structure-from-Motion (SfM) -> estimates the camera pose or viewing direction from a set of 2D images
Step 2) Multi-View Stereo (MVS) -> reconstructs dense 3D geometry (calculates depth maps)
Step 3) Surface Reconstruction -> produces a globally consistent surface mesh

The legacy SfM module (step 1) comprises of the 1a)-1e) algorithmic steps listed below. The proposed solution is embedded in the SfM and modifies algorithmic steps 1b)-1d) /also marked in bold for better visibility/. The steps 1b)-1d) are executed in an iterative procedure such that initial key point correspondence helps to estimate the geometric transform between images and next this geometric transform is used to reject erroneous key point association (by rejecting matched key point pairs that do not fit the model).
**1a)** detect and extract features (key points) like SIFT, SURF, MSER, AKAZE
**1b)** match features (establish key point correspondence between pairs of images)
**1c)** based on the set of mapped key points, establish geometric transform for image registration
**1d)** use initially estimated transform to reject incorrectly mapped points, i.e., reject outliers by deploying RANSAC type algorithm, see Torr, P. H. S., and A. Zisserman. "MLESAC: A New Robust Estimator with Application to Estimating Image Geometry." Trans. Computer Vision and Image Understanding, vol. 18, Issue 1, 2000.
1e) estimate camera pose by triangulation (create sparse 3D point cloud)

The proposed 3D model generation module executes the step 1a) as in the legacy SfM algorithms. Before executing step 1b) the Keypoint Goodness Indicator is used to split the key points into two categories K+ and K-. The set K- is then removed from the initial matching step to ensure accurate estimation of the geometric model (i.e., parameters for the projective transform that maps one image onto another image). Once the initial geometric transform is in place, the entire set of key points could be used {K+, K-} to refine the model. Incorrect mappings would be easily rejected by the RANSAC in step 1d).

With this solution there is no loss of information in the sense, as when one would remove upfront image regions that belong to the sky. The "sky" will be still there, but correctly registered to the visual scene. The solution also improves the convergence of the image registration step by filtering out many potential outliers that could create unrealistic mappings between images.

Since the subset of key points K- are kept, they could be used to guide the MVS module (listed above as step 2), since the depth of all these points is infinity. This could speed up the process of creating depth map of the visual scene.

### Keypoint Goodness Indicator

The purpose of the Keypoint Goodness Indicator module D0 - DM is to learn the statistics of key points descriptors (learn the probability density function of the available samples) and then given an unseen set of key points to assign a class label C to each one of them, i.e. to label key points.

If for example we use GMM, we classify key point with descriptor *x* as belonging to a sky if *P*(*x*|*λ^{sky}*) > *P*(*x*|*λ^{equipment}*), where λ are the corresponding GMMs.

A further purpose of the Keypoint Goodness Indicator module D0 - DM is to discriminate key points labeled as depicting the 3D object 120 into the first subset of key points KP_0', KP_1',... KP_M' and to discriminate key points labeled as depicting a background of the 3D object 120 into the second subset of key points KP_0", KP_1",... KP_M".

The classifier could be based on a Generative Models for Clustering, GMM, or discriminative models/discriminative NN architecture, also referred to as conditional models. Discriminative models are a class of models typically used in statistical classification, especially in supervised machine learning.

The learning or training of a model is based on training data comprising annotated recordings of cell towers and the relevant telecom equipment. The recording session where the drone camera point upwards, creates set of images with known telecom equipment and only sky as a background. In this way we have the input image portioned into foreground and background and we can automatically assign to any point in the image one of two classes {3D Object, Background}.

Next, a classifier is trained on key point descriptors of key points in the training data, to automatically recognize key points belonging to antenna vs key points belonging to the background, such as the sky. The training can be done directly on the feature space (key point descriptors) or by creating Bag-of-Words (BoW) (projecting them on a larger space of descriptors). For further information on BoW, see J. Sivic and A. Zisserman, "Video Google: a text retrieval approach to object matching in videos," in Proc. Ninth IEEE International Conference on Computer Vision (ICCV), 2003.

In the solution described above, the training data comprising annotated visual data is of the same type as for a visual object detector, i.e., object location marked on a Bounding Box (BB) level. Since in embodiments where the training data is generated by manually annotating data, there will be a very small percentage incorrectly assigned key points (e.g. a part of an image depicting the sky that falls in the antenna's BB) and the statistical learning/training will remove these outliers. Please, note that this procedure is not the same as using a visual object detector at run time, because the produced BBs may have Intersection over Union (IoU) down to 50% (typical level above which the object is considered recognized). This however, will produce large number of incorrectly classified key points and will introduce bias in the learning process.

In an alternative way to generate training data, a pre-processing module is applied to the current visual scene. In one embodiment, the pre-processing module is based on depth sensor data and could be built as follows.

Additional distance or depth sensing sensors (e.g. in combination with SLAM type algorithm could be used or a depth camera/stereo camera can be used, which can help to segment out the unwanted background and determine which key points that relate to the 3D object and which that relate to the background. In one example, video recordings using an RGB and depth camera and looking upwards, all key points with a measured (by the camera) infinite depth belong to the sky region (K-), while the rest of the key points is antennas and other hardware equipment (K+). This training data can then be used to train the trained model.

In yet an alternative way to generate training data, visual object detector is used to provide training data. The visual object detector that can segment out the 3D object or objects of interest on a per-pixel level. Currently the most popular algorithm for the task can be found in Mask R-CNN, see K. He, G. Gkioxari, P. Dollar, and R. Girshick, " Mask R-CNN," in Proc. IEEE International Conference on Computer Vision (ICCV), 2017. The neural network extends the conventional bounding box level detection, but calculates segmentation masks for each region of interest

Still, these two alternative ways or solutions may have the advantage that can be used as a stand-alone pre-processor to the 3D modeling logic. This could be beneficial when 3rd party 3D modeling system is used, which would accept only indication of unstable image regions, but not integration with the image registration step.

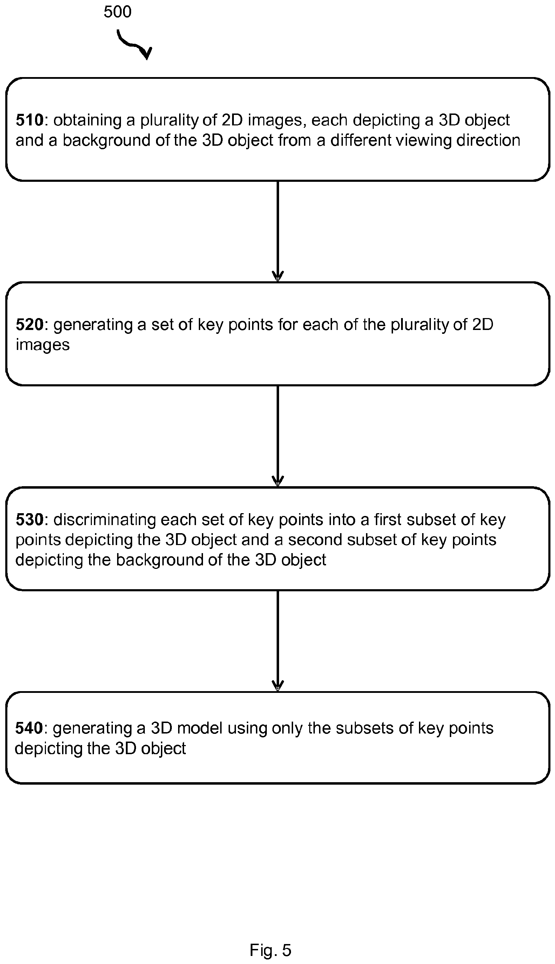

Further details of the method are described in relation to Fig. 5.

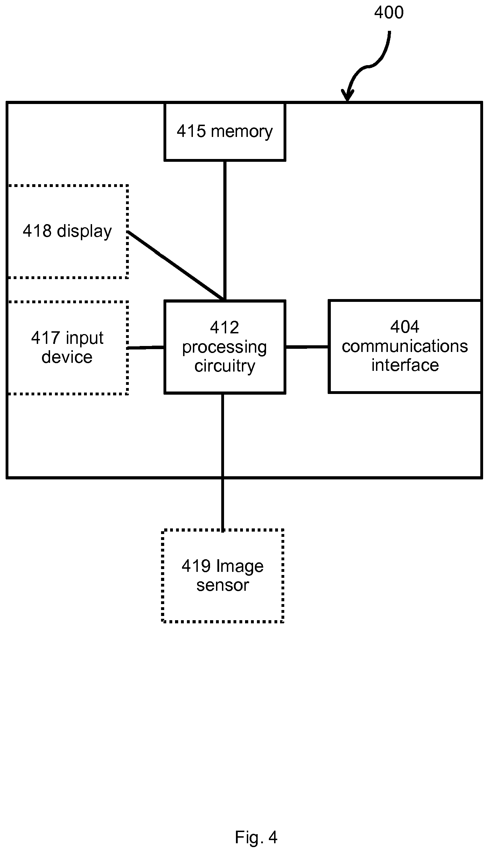

**Fig. 4** shows details of a computer device 400 according to one or more embodiments. The computer device 400 may be in the form of a selection of any of a desktop computer, server, laptop, mobile device, a smartphone, a tablet computer, a smart-watch etc. The computer device 400 may comprise processing circuitry 412 optionally communicatively coupled to a communications interface 404 for wired and/or wireless communication. Further, the computer device 400 may further comprise at least one optional antenna (not shown in figure). The antenna may be coupled to a transceiver of the communications interface and is configured to transmit and/or emit and/or receive a wireless signal in a wireless communication system. In one example, the processing circuitry 412 may be any of a selection of processor and/or a central processing unit and/or processor modules and/or multiple processors configured to cooperate with each-other. Further, the computer device 400 may further comprise a memory 415. The memory 415 may contain instructions executable by the processing circuitry to perform any of the methods and/or method steps described herein.

The communications interface 404, e.g. the wireless transceiver and/or a wired/wireless communications network adapter, which is configured to send and/or receive data values or parameters as a signal to or from the processing circuitry 412 to or from other external nodes, e.g. a drone (not shown in the figure). In an embodiment, the communications interface communicates directly between nodes or via a communications network.

In one or more embodiments the computer device 400 may further comprise an input device 417, configured to receive input or indications from a user and send a user-input signal indicative of the user input or indications to the processing circuitry 412.

In one or more embodiments the computer device 400 may further comprise a display 418 configured to receive a display signal indicative of rendered objects, such as text or graphical user input objects, from the processing circuitry 412 and to display the received signal as objects, such as text or graphical user input objects.

In one embodiment the display 418 is integrated with the user input device 417 and is configured to receive a display signal indicative of rendered objects, such as text or graphical user input objects, from the processing circuitry 412 and to display the received signal as objects, such as text or graphical user input objects, and/or configured to receive input or indications from a user and send a user-input signal indicative of the user input or indications to the processing circuitry 412.

In one or more embodiments the computer device 400 may further comprise one or more sensors 419, such as an image sensor e.g. as a camera, configured to capture a video.

In embodiments, the processing circuitry 412 is communicatively coupled to the memory 415 and/or the communications interface 404 and/or the input device 417 and/or the display 418 and/or the one or more sensors 419.

In embodiments, the communications interface and/or transceiver 404 communicates using wired and/or wireless communication techniques.

In embodiments, the one or more memory 415 may comprise a selection of a hard RAM, disk drive, a floppy disk drive, a magnetic tape drive, an optical disk drive, a CD or DVD drive (R or RW), or other removable or fixed media drive.

In a further embodiment, the computer device 400 may further comprise and/or be coupled to one or more additional sensors (not shown) configured to receive and/or obtain and/or measure physical properties pertaining to the computer device or the environment of the computer device, and send one or more sensor signals indicative of the physical properties to the processing circuitry 412.

It is to be understood that a computer device comprises any suitable combination of hardware and/or software needed to perform the tasks, features, functions and methods disclosed herein. Moreover, while the components of the computer device are depicted as single boxes located within a larger box, or nested within multiple boxes, in practice, a computer device may comprise multiple different physical components that make up a single illustrated component (e.g., memory 415 may comprise multiple separate hard drives as well as multiple RAM modules).

Similarly, the computer device 400 may be composed of multiple physically separate components, which may each have their own respective components.

The communications interface 404 may also include multiple sets of various illustrated components for different wireless technologies, such as, for example, GSM, WCDMA, LTE, NR, WiFi, or Bluetooth wireless technologies. These wireless technologies may be integrated into the same or different chip or set of chips and other components within the computer device 400.

Processing circuitry 412 is configured to perform any determining, calculating, or similar operations (e.g., certain obtaining operations) described herein as being provided by a computer device 400. These operations performed by processing circuitry 412 may include processing information obtained by processing circuitry 412 by, for example, converting the obtained information into other information, comparing the obtained information or converted information to information stored in the network node, and/or performing one or more operations based on the obtained information or converted information, and as a result of said processing making a determination.

Processing circuitry 412 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other computer device 400 components, such as device readable medium, computer 400 functionality. For example, processing circuitry 412 may execute instructions stored in device readable medium 415 or in memory within processing circuitry 412. Such functionality may include providing any of the various wireless features, functions, or benefits discussed herein. In some embodiments, processing circuitry 412 may include a system on a chip.

In some embodiments, processing circuitry 412 may include one or more of radio frequency, RF, transceiver circuitry and baseband processing circuitry. In some embodiments, RF transceiver circuitry and baseband processing circuitry may be on separate chips or sets of chips, boards, or units, such as radio units and digital units. In alternative embodiments, part or all of RF transceiver circuitry and baseband processing circuitry may be on the same chip or set of chips, boards, or units

In certain embodiments, some or all of the functionality described herein as being provided by a computer device 400 may be performed by processing circuitry 412 executing instructions stored on device readable medium 415 or memory within processing circuitry 412. In alternative embodiments, some or all of the functionality may be provided by processing circuitry 412 without executing instructions stored on a separate or discrete device readable medium, such as in a hard-wired manner. In any of those embodiments, whether executing instructions stored on a device readable storage medium or not, processing circuitry 412 can be configured to perform the described functionality. The benefits provided by such functionality are not limited to processing circuitry 412 alone or to other components of computer device 400, but are enjoyed by computer device 400 as a whole, and/or by end users.

Device readable medium 415 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 412. Device readable medium 415 may store any suitable instructions, data or information, including a computer program, software, an application including one or more of logic, rules, code, tables, etc. and/or other instructions capable of being executed by processing circuitry 412 and, utilized by computer device 400. Device readable medium QQ180 may be used to store any calculations made by processing circuitry 412 and/or any data received via interface 404. In some embodiments, processing circuitry 412 and device readable medium 415 may be considered to be integrated.

The communications interface 404 is used in the wired or wireless communication of signaling and/or data between computer device 400 and other nodes. Interface 404 may comprise port(s)/terminal(s) to send and receive data, for example to and from computer device 400 over a wired connection. Interface 404 also includes radio front end circuitry that may be coupled to, or in certain embodiments a part of, an antenna. Radio front end circuitry may comprise filters and amplifiers. Radio front end circuitry may be connected to the antenna and/or processing circuitry 412.

Examples of a computer device 400 include, but are not limited to, a smart phone, a mobile phone, a cell phone, a voice over IP (VoIP) phone, a wireless local loop phone, a tablet computer, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc.

The communication interface may 404 encompass wired and/or wireless networks such as a local-area network (LAN), a wide-area network (WAN), a computer network, a wireless network, a telecommunications network, another like network or any combination thereof. The communication interface may be configured to include a receiver and a transmitter interface used to communicate with one or more other devices over a communication network according to one or more communication protocols, such as Ethernet, TCP/IP, SONET, ATM, optical, electrical, and the like). The transmitter and receiver interface may share circuit components, software or firmware, or alternatively may be implemented separately.

In one embodiment, a computer device 400 is provided and is configured to perform any of the method steps described herein.

In one embodiment, a computer program is provided and comprises computer-executable instructions for causing a computer device, when the computer-executable instructions are executed on a processing unit comprised in the computer device, to perform any of the method steps described herein.

In one embodiment, a computer program product is provided and comprises a computer-readable storage medium, the computer-readable storage medium having the computer program above embodied therein.

In one embodiment, a carrier is provided and contains the computer program above. The carrier may be any one of an electronic signal, an optical signal, a radio signal, or a computer readable storage medium.

**Fig. 5** shows a flowchart of a method 500 according to one or more embodiments. The method 500 is typically performed by a computer device 400 configured to generate a three dimensional, 3D, model. The method comprises:
**Step 510:** obtaining a plurality of two dimensional, 2D, images (I_0 - I_M), the plurality of 2D images (I_0 - I_M), each depicting a 3D object (120) from a different viewing direction (WD1, WD2) and a background of the 3D object, wherein the plurality of 2D images are obtained using a camera.

In one example, the plurality of 2D images are obtained by receiving a signal from a drone, the signal comprising data indicative of the plurality of 2D images. In one further example, the plurality of 2D images are obtained by retrieving the plurality of 2D images from memory, e.g. from the memory 415 of the computer device. In one further example, the plurality of 2D images are obtained by receiving a second signal from a second computer device, the signal comprising data indicative of the plurality of 2D images. E.g. receiving a signal from a cloud server or central server.

The terms "2D images", "3D object", "viewing direction", "background" and "camera" are further described in the initial paragraphs of the detailed description.

**Step 520:** generating a total set of key points KP_0, KP_1,... KP_M for each of the plurality of 2D images I_0 - I_M. Generation of key points is further described in the initial paragraphs of the detailed description in relation to the feature "key points".

In one example, key points are generated by means of Harris Corner Detector or corners detected by FAST (Features from Accelerated Segment Test). In one further example, key points are generated using SURF (Speeded Up Robust Features), where the key point generation is based on the approximation of the determinant of the Hessian matrix. In one further example, key points are generated using SIFT (Scale-Invariant Feature Transform), where difference-of-Gaussians is used to detect points that are invariant to scale and orientation. In one further example, key points are generated using center of blobs (image regions) calculated by the MSER (Maximally Stable Extremal Regions) method.

**Step 530**: discriminating 530 each total set of key points KP_0, KP_1,... KP_M into a first subset of key points KP_0', KP_1', ... KP_M' depicting the 3D object 120 and a second subset of key points KP_0", KP_1",... KP_M" depicting the background of the 3D object. Discrimination of key points may be performed by applying a trained model to the generated sets of key points KP_0, KP_1,... KP_M. The features "trained model", "3D object" and "background" are further described in the initial paragraphs of the detailed description.

In one embodiment of the present disclosure, the trained model comprises a classifier configured to label key points either as depicting the 3D object 120 or as depicting the background of the 3D object (120). The step of discriminating 530, is then performed by discriminating key points labeled as depicting the 3D object 120 into the first subset of key points KP_0', KP_1',... KP_M' and to discriminate key points labeled as depicting a background of the 3D object 120 into the second subset of key points KP_0", KP_1",... KP_M".

Additionally or alternatively, the classifier is trained using training data comprising key point descriptors. The feature "key point descriptors" is further described in the initial paragraphs of the detailed description.

In one example with reference to Fig. 3, a first total set KP_0 of key points is discriminated into a set KP_0' of key points labeled by the classifier as depicting the object 120 and a set KP_0" labeled by the classifier as depicting the background. A second total set KP_1 of key points is discriminated into a set KP_1' of key points labeled by the classifier as depicting the object 120 and a set KP_1" labeled by the classifier as depicting the background. A M:th total set KP_M of key points is discriminated into a set KP_M' of key points labeled by the classifier as depicting the object 120 and a set KP_M" labeled by the classifier as depicting the background.

**Step 540:** generating a 3D model using only the subsets of key points KP_0', KP_1',... KP_M' depicting the 3D object 120.

In one example with reference to Fig. 3, only the sets of key points KP_0', KP_1', ... KP_M' labeled by the classifier as depicting the object 120 are then used as input for generating the 3D model representing the 3D object.

In one embodiment, the generated 3D model is used to identify the 3D object 120 or sub objects 1201, 1202, 1203, e.g. to determine an identity or model number of the telecommunications site or to determine an identity or model number of individual equipment or parts thereof installed at the telecommunications site. In this embodiment, the method further comprises:
identifying the 3D object 120 or sub objects 1201, 1202, 1203 of the 3D object by comparing the 3D model to predetermined object data defining the 3D object and/or sub objects of the 3D object and to determine identities of the object 120 or the sub objects 1201, 1202, 1203 matching the predetermined object data. The predetermined object data may e.g. comprise identity, model number or physical measures of equipment sites or equipment.

In one embodiment, the generated 3D model is used to present the modeled equipment site to a user, e.g. on a screen or in Virtual Reality goggles. In this embodiment, the method further comprises rendering the 3D object 120 or sub objects of the 3D object on a display.

Additionally or alternatively, the method further comprises receiving user input and performing measurements on the 3D using the 3D model.

In one example, this may include to receive user input indicative of two points in the 3D model, and calculating a distance between those two points, e.g. to calculate the distance between two antennas at a telecommunications site.

In one embodiment, the depicted 3D object 120 comprises a telecommunications site. Additionally or alternatively, the telecommunications site 120 comprises sub objects 1201, 1202, 1203, such as installed antennas, connectors, feeders or remote radio units mounted on a telecommunications tower.

In one embodiment, the plurality of 2D images are obtained by using a drone.

In one embodiment, a drone carrying a camera encircles a telecommunications tower and captures images of equipment, such as antennas, from below the equipment, thus resulting in images where the background dominantly depicts the sky. In this embodiment, the different viewing directions WD1, WD2 are limited to upward facing viewing directions relative to the ground and the depicted background comprises sky.

In one embodiment, a drone carrying a camera encircles a telecommunications tower located in or near water, and captures images of equipment, such as antennas, from above the equipment, thus resulting in images where the background dominantly depicts the water or sea. In this embodiment, the different viewing directions WD1, WD2 are limited to downward facing viewing directions relative to the ground and the depicted background comprises water or sea.

With reference to Fig. 4, some embodiments comprise a computer device 400.

The computer device 400 is configured to generate a three dimensional, 3D, model. The computer device comprises processing circuitry 412, a memory 415 comprising instructions executable by the processing circuitry 412, causing the processing circuitry 412 to obtain a plurality of two dimensional, 2D, images I_0 - I_M, the plurality of 2D images I_0 - I_M, each depicting a 3D object 120 from a different viewing direction WD1, WD2 and a background of the 3D object, wherein the plurality of 2D images are obtained using a camera, generate a set of key points KP_0, KP_1,... KP_M for each of the plurality of 2D images I_0 - I_M, discriminate each set of key points KP_0, KP_1,... KP_M into a first subset of key points KP_0', KP_1', ... KP_M' depicting the 3D object 120 and a second subset of key points KP_0", KP_1",... KP_M" depicting the background of the 3D object, generate a 3D model using only the subsets of key points KP_0', KP_1',... KP_M' depicting the 3D object 120, wherein discriminate each set of key points KP_0, KP_1,... KP_M is performed by applying a trained model to the generated sets of key points KP_0, KP_1,... KP_M.

Alternatively or additionally, the trained model is a classifier configured to label key points as depicting the 3D object 120 or depicting the background of the 3D object 120, and to discriminate key points labeled as depicting the 3D object 120 into the first subset of key points KP_0', KP_1',... KP_M' and to discriminate key points labeled as depicting a background of the 3D object 120 into the second subset of key points KP_0", KP_1",... KP_M".

Alternatively or additionally, the classifier is trained using training data comprising key point descriptors.

Alternatively or additionally, the instructions further causes the processing circuitry to identify the 3D object 120 or sub objects 1201, 1202, 1203 of the 3D object by comparing the 3D model to predetermined object data defining the 3D object and/or sub objects of the 3D object and to determine identities of the object 120 or the sub objects 1201, 1202, 1203 matching the predetermined object data.

Alternatively or additionally, the instructions further causes the processing circuitry to identify the 3D object 120 or sub objects of the 3D object by comparing the 3D model to predetermined object data defining the 3D object and/or sub objects of the 3D object.

Alternatively or additionally, the instructions further causes the processing circuitry to render the 3D object 120 or sub objects of the 3D object on a display.

Alternatively or additionally, the depicted 3D object 120 comprises a telecommunications site.

Alternatively or additionally, the plurality of 2D images are obtained by using a drone.

In one embodiment, a computer program is provided and comprising computer-executable instructions for causing a computer device 400, when the computer-executable instructions are executed on a processing unit comprised in the computer device 400, to perform any of the method steps described herein.

In one embodiment, a computer program product comprising a computer-readable storage medium, the computer-readable storage medium having the computer program above embodied therein.

In one embodiment, a carrier containing the computer program above, where the carrier is one of an electronic signal, optical signal, radio signal, or computer readable storage medium.

Finally, it should be understood that the invention is not limited to the embodiments described above, but also relates to and incorporates all embodiments within the scope of the appended independent claims.

## Claims

1. A method (500) performed by a computer device (400) configured to generate a three dimensional, 3D, model, the method comprising:
obtaining (510) a plurality of two dimensional, 2D, images (I_0 - I_M), the plurality of 2D images (I_0 - I_M), each depicting a 3D object (120) and a background of the 3D object from a different viewing direction (WD1, WD2), wherein the plurality of 2D images are obtained using a camera, and
wherein the different viewing directions (WD1, WD2) are limited to upward facing viewing directions relative to ground and the depicted background comprises sky, or
wherein the different viewing directions (WD1, WD2) are limited to downward facing viewing directions relative to the ground and the depicted background comprises sea,
generating (520) a total set of key points (KP_0, KP_1,... KP_M) for each of the plurality of 2D images (I_0 - I_M),
discriminating (530) each total set of key points (KP_0, KP_1,... KP_M) into a first subset of key points (KP_0', KP_1', ... KP_M') depicting the 3D object (120) and a second subset of key points (KP_0", KP_1",... KP_M") depicting the background of the 3D object,
generating (540) a 3D model using only the subsets of key points (KP_0', KP_1',... KP_M') depicting the 3D object (120),
wherein discriminating each set of key points (KP_0, KP_1,... KP_M) is performed by applying a trained model to the generated sets of key points (KP_0, KP_1,... KP_M).

2. The method according to claim 1, wherein the trained model is a classifier configured to label key points as depicting the 3D object (120) or depicting the background of the 3D object (120), and to discriminate key points labeled as depicting the 3D object (120) into the first subset of key points (KP_0', KP_1',... KP_M') and to discriminate key points labeled as depicting a background of the 3D object (120) into the second subset of key points (KP_0", KP_1",... KP_M").

3. The method according to any of the preceding claims, wherein the method further comprises:
identifying the 3D object (120) or sub objects (1201, 1202, 1203) of the 3D object by comparing the 3D model to predetermined object data defining the 3D object and/or sub objects of the 3D object and to determine identities of the object (120) or the sub objects (1201, 1202, 1203) matching the predetermined object data.

4. A computer device (400) configured to generate a three dimensional, 3D, model, the computer device comprising:
processing circuitry (412),
a memory (415) comprising instructions executable by the processing circuitry (412), causing the processing circuitry (412) to
obtain a plurality of two dimensional, 2D, images (I_0 - I_M), the plurality of 2D images (I_0 - I_M), each depicting a 3D object (120) and a background of the 3D object from a different viewing direction (WD1, WD2), wherein the plurality of 2D images are obtained using a camera, and wherein the different viewing directions (WD1, WD2) are limited to upward facing viewing directions relative to ground and the depicted background comprises sky, or
wherein the different viewing directions (WD1, WD2) are limited to downward facing viewing directions relative to the ground and the depicted background comprises sea,
generate a total set of key points (KP_0, KP_1,... KP_M) for each of the plurality of 2D images (I_0 - I_M),
discriminate each total set of key points (KP_0, KP_1,... KP_M) into a first subset of key points (KP_0', KP_1', ... KP_M') depicting the 3D object (120) and a second subset of key points (KP_0", KP_1",... KP_M") depicting the background of the 3D object,
generate a 3D model using only the subsets of key points (KP_0', KP_1',... KP_M') depicting the 3D object (120),
wherein discriminate each set of key points (KP_0, KP_1,... KP_M) is performed by applying a trained model to the generated sets of key points (KP_0, KP_1,... KP_M).

5. The computer device according to claim 4, wherein the trained model is a classifier configured to label key points as depicting the 3D object (120) or depicting the background of the 3D object (120), and to discriminate key points labeled as depicting the 3D object (120) into the first subset of key points (KP_0', KP_1',... KP_M') and to discriminate key points labeled as depicting a background of the 3D object (120) into the second subset of key points (KP_0", KP_1",... KP_M").

6. The computer device according to any of claims 4 or 5, wherein the classifier is trained using training data comprising key point descriptors.

7. The computer device according to claim 6, wherein the key point descriptors are based on intensity or color distributions in the vicinity of each key point.

8. The computer device according to any of claims 4-7, wherein the instructions further cause the processing circuitry to:
identify the 3D object (120) or sub objects (1201, 1202, 1203) of the 3D object by comparing the 3D model to predetermined object data defining the 3D object and/or sub objects of the 3D object and to determine identities of the object (120) or the sub objects (1201, 1202, 1203) matching the predetermined object data.

9. The computer device according to any of claims 4-8, wherein the instructions further cause the processing circuitry to:
render the 3D object (120) or sub objects of the 3D object on a display.

10. The computer device according to any of claims 4-9, wherein the depicted 3D object (120) comprises a telecommunications site.

11. The computer device according to claim 10, wherein telecommunications site (120) comprises sub objects (1201, 1202, 1203), such as antennas, connectors, feeders or remote radio units.

12. The computer device according to any of claims 4-11, wherein the plurality of 2D images are obtained by using a drone.

13. A computer program comprising computer-executable instructions for causing a computer device (400), when the computer-executable instructions are executed on processing circuitry (412) comprised in the computer device (400), to perform any of the method steps according to claims 1-3.

14. A computer program product comprising a computer-readable storage medium, the computer-readable storage medium having the computer program according to claim 13 embodied therein.

15. A carrier containing the computer program according to claim 13, wherein the carrier is one of an electronic signal, optical signal, radio signal, or computer readable storage medium.

## Patentansprüche

1. Verfahren (500), das durch eine Computervorrichtung (400) durchgeführt wird, die dazu konfiguriert ist, ein dreidimensionales (3D) Modell zu erzeugen, wobei das Verfahren Folgendes umfasst:
Erlangen (510) einer Vielzahl von zweidimensionalen (2D) Bildern (I_0 - I_M), wobei die Vielzahl von 2D-Bildern (I_0 - 1_M) jeweils ein 3D-Objekt (120) und einen Hintergrund des 3D-Objekts aus einer unterschiedlichen Blickrichtung (WD1, WD2) abbildet, wobei die Vielzahl von 2D-Bildern unter Verwendung einer Kamera erlangt wird und
wobei die unterschiedlichen Blickrichtungen (WD1, WD2) auf nach oben gewandte Blickrichtungen in Bezug auf Boden begrenzt sind und der abgebildete Hintergrund Himmel umfasst oder
wobei die unterschiedlichen Blickrichtungen (WD1, WD2) auf nach unten gewandte Blickrichtungen in Bezug auf den Boden begrenzt sind und der abgebildete Hintergrund Meer umfasst,
Erzeugen (520) eines Gesamtsatzes von Schlüsselpunkten (KP 0, KP_1, ... KP_M) für jedes der Vielzahl von 2D-Bildern (I_0 - I_M),
Unterscheiden (530) jedes Gesamtsatzes von Schlüsselpunkten (KP_0, KP_1, ... KP_M) in einen ersten Teilsatz von Schlüsselpunkten (KP_0' , KP_1', ... KP_M'), der das 3D-Objekt (120) abbildet, und einen zweiten Teilsatz von Schlüsselpunkten (KP_0", KP_1", ... KP_M"), der den Hintergrund des 3D-Objekts abbildet,
Erzeugen (540) eines 3D-Modells nur unter Verwendung der Teilsätze von Schlüsselpunkten (KP_0', KP_1', ... KP_M'), die das 3D-Objekt (120) abbilden,
wobei das Unterscheiden jedes Satzes von Schlüsselpunkten (KP_0, KP_1, ... KP_M) durch Anwenden eines trainierten Modells auf die erzeugten Sätze von Schlüsselpunkten (KP_0, KP_1, ... KP_M) durchgeführt wird.

2. Verfahren nach Anspruch 1, wobei das trainierte Modell ein Klassifikator ist, der dazu konfiguriert ist, Schlüsselpunkte als das 3D-Objekt (120) abbildend oder den Hintergrund des 3D-Objekts (120) abbildend zu beschriften und als das 3D-Objekt (120) abbildend beschriftete Schlüsselpunkte in den ersten Teilsatz von Schlüsselpunkten (KP_0', KP_1', ... KP_M') zu unterscheiden und als einen Hintergrund des 3D-Objekts (120) abbildend beschriftete Schlüsselpunkte in den zweiten Teilsatz von Schlüsselpunkten (KP_0", KP_1", ... KP_M") zu unterscheiden.

3. Verfahren nach einem der vorhergehenden Ansprüche, wobei das Verfahren ferner Folgendes umfasst:
Identifizieren des 3D-Objekts (120) oder von Teilobjekten (1201, 1202, 1203) des 3D-Objekts durch Vergleichen des 3D-Modells mit vorbestimmten Objektdaten, die das 3D-Objekt und/oder die Teilobjekte des 3D-Objekts definieren, und zum Bestimmen von Identitäten des Objekts (120) oder der Teilobjekte (1201, 1202, 1203), die mit den vorbestimmten Objektdaten übereinstimmen.

4. Computervorrichtung (400), die dazu konfiguriert ist, ein dreidimensionales (3D) Modell zu erzeugen, wobei die Computervorrichtung Folgendes umfasst:
eine Verarbeitungsschaltung (412),
einen Speicher (415), der durch die Verarbeitungsschaltung (412) ausführbare Anweisungen umfasst, die die Verarbeitungsschaltung (412) zu Folgendem veranlassen:
Erlangen einer Vielzahl von zweidimensionalen (2D) Bildern (I_0 - I_M), wobei die Vielzahl von 2D-Bildern (I_0 - I_M) jeweils ein 3D-Objekt (120) und einen Hintergrund des 3D-Objekts aus einer unterschiedlichen Blickrichtung (WD1, WD2) abbildet, wobei die Vielzahl von 2D-Bildern unter Verwendung einer Kamera erlangt wird und wobei die unterschiedlichen Blickrichtungen (WD1, WD2) auf nach oben gewandte Blickrichtungen in Bezug auf Boden begrenzt sind und der abgebildete Hintergrund Himmel umfasst oder
wobei die unterschiedlichen Blickrichtungen (WD1, WD2) auf nach unten gewandte Blickrichtungen in Bezug auf den Boden begrenzt sind und der abgebildete Hintergrund Meer umfasst,
Erzeugen eines Gesamtsatzes von Schlüsselpunkten (KP_0, KP_1, ... KP_M) für jedes der Vielzahl von 2D-Bildern (I_0 - I_M), Unterscheiden jedes Gesamtsatzes von Schlüsselpunkten (KP_0, KP_1, ... KP_M) in einen ersten Teilsatz von Schlüsselpunkten (KP_0', KP_1', ... KP_M'), der das 3D-Objekt (120) abbildet, und einen zweiten Teilsatz von Schlüsselpunkten (KP_0", KP_1", ... KP_M"), der den Hintergrund des 3D-Objekts abbildet,
Erzeugen eines 3D-Modells nur unter Verwendung der Teilsätze von Schlüsselpunkten (KP_0', KP_1', ... KP_M'), die das 3D-Objekt (120) abbilden,
wobei das Unterscheiden jedes Satzes von Schlüsselpunkten (KP_0, KP_1, ... KP_M) durch Anwenden eines trainierten Modells auf die erzeugten Sätze von Schlüsselpunkten (KP_0, KP_1, ... KP_M) durchgeführt wird.

5. Computervorrichtung nach Anspruch 4, wobei das trainierte Modell ein Klassifikator ist, der dazu konfiguriert ist, Schlüsselpunkte als das 3D-Objekt (120) abbildend oder den Hintergrund des 3D-Objekts (120) abbildend zu beschriften und als das 3D-Objekt (120) abbildend beschriftete Schlüsselpunkte in den ersten Teilsatz von Schlüsselpunkten (KP_0', KP_1', ... KP_M') zu unterscheiden und als einen Hintergrund des 3D-Objekts (120) abbildend beschriftete Schlüsselpunkte in den zweiten Teilsatz von Schlüsselpunkten (KP_0", KP_1", ... KP_M") zu unterscheiden.

6. Computervorrichtung nach einem der Ansprüche 4 oder 5, wobei der Klassifikator unter Verwendung von Trainingsdaten trainiert wird, die Schlüsselpunktdeskriptoren umfassen.

7. Computervorrichtung nach Anspruch 6, wobei die Schlüsselpunktdeskriptoren auf Intensitäts- oder Farbverteilungen in der Nähe jedes Schlüsselpunkts basieren.

8. Computervorrichtung nach einem der Ansprüche 4-7, wobei die Anweisungen die Verarbeitungsschaltung ferner zu Folgendem veranlassen:
Identifizieren des 3D-Objekts (120) oder von Teilobjekten (1201, 1202, 1203) des 3D-Objekts durch Vergleichen des 3D-Modells mit vorbestimmten Objektdaten, die das 3D-Objekt und/oder die Teilobjekte des 3D-Objekts definieren, und zum Bestimmen von Identitäten des Objekts (120) oder der Teilobjekte (1201, 1202, 1203), die mit den vorbestimmten Objektdaten übereinstimmen.

9. Computervorrichtung nach einem der Ansprüche 4-8, wobei die Anweisungen die Verarbeitungsschaltung ferner zu Folgendem veranlassen:
Rendern des 3D-Objekts (120) oder der Teilobjekte des 3D-Objekts auf einer Anzeige.

10. Computervorrichtung nach einem der Ansprüche 4-9, wobei das abgebildete 3D-Objekt (120) einen Telekommunikationsstandort umfasst.

11. Computervorrichtung nach Anspruch 10, wobei der Telekommunikationsstandort (120) Teilobjekte (1201, 1202, 1203) wie etwa Antennen, Verbinder, Zuleitungen oder Fernfunkeinheiten umfasst.

12. Computervorrichtung nach einem der Ansprüche 4-11, wobei die Vielzahl von 2D-Bildern durch Verwenden einer Drohne erlangt wird.

13. Computerprogramm, umfassend computerausführbare Anweisungen zum Veranlassen einer Computervorrichtung (400), wenn die computerausführbaren Anweisungen auf einer Verarbeitungsschaltung (412) ausgeführt werden, die in der Computervorrichtung (400) umfasst ist, einen beliebigen der Verfahrensschritte nach Anspruch 1-3 durchzuführen.

14. Computerprogrammprodukt, umfassend ein computerlesbares Speichermedium, wobei in dem computerlesbaren Speichermedium das Computerprogramm nach Anspruch 13 verkörpert ist.

15. Träger, enthaltend das Computerprogramm nach Anspruch 13, wobei der Träger eines von einem elektronischen Signal, optischen Signal, Funksignal oder computerlesbaren Speichermedium ist.

## Revendications

1. Procédé (500) réalisé par un dispositif informatique (400) configuré pour générer un modèle tridimensionnel, 3D, le procédé comprenant :
l'obtention (510) d'une pluralité d'images bidimensionnelles, 2D (I_0 - I_M), la pluralité d'images 2D (I_0 - I_M) représentant chacune un objet 3D (120) et un arrière-plan de l'objet 3D à partir d'une direction de visualisation (WD1, WD2) différente, dans lequel la pluralité d'images 2D sont obtenues en utilisant une caméra, et
dans lequel les différentes directions de visualisation (WD1, WD2) sont limitées à des directions de visualisation tournées vers le haut par rapport au sol et l'arrière-plan représenté comprend le ciel, ou
dans lequel les différentes directions de visualisation (WD1, WD2) sont limitées à des directions de visualisation tournées vers le bas par rapport au sol et l'arrière-plan représenté comprend la mer,
la génération (520) d'un ensemble total de points clés (KP_0, KP_1, ... KP_M) pour chacune de la pluralité d'images 2D (I_0 - I_M),
la discrimination (530) de chaque ensemble total de points clés (KP_0, KP_1,... KP_M) en un premier sous-ensemble de points clés (KP_0', KP_1', ... KP_M') représentant l'objet 3D (120) et un second sous-ensemble de points clés (KP_0", KP_1",... KP_M") représentant l'arrière-plan de l'objet 3D,
la génération (540) d'un modèle 3D en utilisant uniquement les sous-ensembles de points clés (KP_0', KP_1', ... KP_M') représentant l'objet 3D (120),
dans lequel la discrimination de chaque ensemble de points clés (KP_0, KP_1, ... KP_M) est réalisée en appliquant un modèle entraîné aux ensembles de points clés (KP_0, KP_1,... KP_M) générés.

2. Procédé selon la revendication 1, dans lequel le modèle entraîné est un classificateur configuré pour étiqueter les points clés comme représentant l'objet 3D (120) ou représentant l'arrière-plan de l'objet 3D (120), et pour discriminer les points clés étiquetés comme représentant l'objet 3D (120) en le premier sous-ensemble de points clés (KP_0', KP_1', ... KP_M') et pour discriminer les points clés étiquetés comme représentant un arrière-plan de l'objet 3D (120) en le second sous-ensemble de points clés (KP_0", KP_1",... KP_M").

3. Procédé selon l'une quelconque des revendications précédentes, dans lequel le procédé comprend en outre :
l'identification de l'objet 3D (120) ou des sous-objets (1201, 1202, 1203) de l'objet 3D en comparant le modèle 3D à des données d'objet prédéterminées définissant l'objet 3D et/ou les sous-objets de l'objet 3D et pour déterminer les identités de l'objet (120) ou les sous-objets (1201, 1202, 1203) correspondant aux données d'objet prédéterminées.

4. Dispositif informatique (400) configuré pour générer un modèle tridimensionnel, 3D, le dispositif informatique comprenant :
un circuit de traitement (412),
une mémoire (415) comprenant des instructions exécutables par le circuit de traitement (412), amenant le circuit de traitement (412) à
obtenir une pluralité d'images bidimensionnelles, 2D, (I_0 - I_M), la pluralité d'images 2D (I_0 - I_M), représentant chacune un objet 3D (120) et un arrière-plan de l'objet 3D en utilisant une direction de visualisation (WD1, WD2) différente, dans lequel la pluralité d'images 2D sont obtenues en utilisant une caméra, et dans lequel les différentes directions de visualisation (WD1, WD2) sont limitées à des directions de visualisation tournées vers le haut par rapport au sol et l'arrière-plan représenté comprend le ciel, ou
dans lequel les différentes directions de visualisation (WD1, WD2) sont limitées à des directions de visualisation tournées vers le bas par rapport au sol et l'arrière-plan représenté comprend la mer,
générer un ensemble total de points clés (KP_0, KP_1,... KP_M) pour chacune de la pluralité d'images 2D (I_0 - I_M),
discriminer chaque ensemble total de points clés (KP_0, KP_1,... KP_M) en un premier sous-ensemble de points clés (KP_0', KP_1', ... KP_M') représentant l'objet 3D (120) et un second sous-ensemble de points clés (KP_0", KP_1",... KP_M") représentant l'arrière-plan de l'objet 3D,
générer un modèle 3D en utilisant uniquement les sous-ensembles de points clés (KP_0', KP_1',... KP_M') représentant l'objet 3D (120),
dans lequel la discrimination de chaque ensemble de points clés (KP_0, KP_1, ... KP M) est réalisée en appliquant un modèle entraîné aux ensembles de points clés (KP_0, KP_1,... KP_M) générés.

5. Dispositif informatique selon la revendication 4, dans lequel le modèle formé est un classificateur configuré pour étiqueter les points clés comme représentant l'objet 3D (120) ou représentant l'arrière-plan de l'objet 3D (120), et pour discriminer les points clés étiquetés comme représentant l'objet 3D (120) en le premier sous-ensemble de points clés (KP_0', KP_1',... KP_M') et pour discriminer les points clés étiquetés comme représentant un arrière-plan de l'objet 3D (120) en le second sous-ensemble de points clés (KP_0", KP_1",... KP_M").

6. Dispositif informatique selon l'une quelconque des revendications 4 ou 5, dans lequel le classificateur est entraîné en utilisant des données d'entraînement comprenant des descripteurs de points clés.

7. Dispositif informatique selon la revendication 6, dans lequel les descripteurs de points clés sont basés sur des distributions d'intensité ou de couleur au voisinage de chaque point clé.

8. Dispositif informatique selon l'une quelconque des revendications 4 à 7, dans lequel les instructions amènent en outre le circuit de traitement à :
identifier l'objet 3D (120) ou les sous-objets (1201, 1202, 1203) de l'objet 3D en comparant le modèle 3D à des données d'objet prédéterminées définissant l'objet 3D et/ou les sous-objets de l'objet 3D et pour déterminer les identités de l'objet (120) ou les sous-objets (1201, 1202, 1203) correspondant aux données d'objet prédéterminées.

9. Dispositif informatique selon l'une quelconque des revendications 4 à 8, dans lequel les instructions amènent en outre le circuit de traitement à :
rendre l'objet 3D (120) ou les sous-objets de l'objet 3D sur un affichage.

10. Dispositif informatique selon l'une quelconque des revendications 4 à 9, dans lequel l'objet 3D (120) représenté comprend un site de télécommunications.

11. Dispositif informatique selon la revendication 10, dans lequel le site de télécommunications (120) comprend des sous-objets (1201, 1202, 1203), tels que des antennes, des connecteurs, des lignes d'alimentation ou des unités radio distantes.

12. Dispositif informatique selon l'une quelconque des revendications 4 à 11, dans lequel la pluralité d'images 2D sont obtenues en utilisant un drone.

13. Programme informatique comprenant des instructions exécutables par ordinateur pour amener un dispositif informatique (400), lorsque les instructions exécutables par ordinateur sont exécutées sur un circuit de traitement (412) compris dans le dispositif informatique (400), à réaliser l'une quelconque des étapes de procédé selon les revendications 1 à 3.

14. Produit de programme informatique comprenant un support de stockage lisible par ordinateur, le support de stockage lisible par ordinateur ayant le programme informatique selon la revendication 13 incorporé dans celui-ci.

15. Porteur contenant le programme informatique selon la revendication 13, dans lequel le porteur est l'un d'un signal électronique, d'un signal optique, d'un signal radio ou d'un support de stockage lisible par ordinateur.
